# EUROPÄISCHE PATENTSCHRIFT

(11) **EP 1 834 068 B1**
(45) Veröffentlichungstag und Bekanntmachung des Hinweises auf die Patenterteilung: **18.10.2017**
(21) Anmeldenummer: 06701502.4
(22) Anmeldetag: 06.01.2006
(51) Int. Cl.: F01N 3/022, B01D 39/20

(54) **VERFAHREN ZUM ENTFERNEN VON PARTIKELN AUS ABGASEN SOWIE FASERLAGE UND PARTIKELFILTER DAZU**
METHOD FOR ELIMINATING PARTICLES CONTAINED IN EXHAUST GASES, FIBROUS LAYER AND PARTICULATE FILTER
PROCEDE D'ELIMINATION DE PARTICULES CONTENUES DANS DES GAZ D'ECHAPPEMENT, COUCHE FIBREUSE ET FILTRE DE PARTICULES APPROPRIES

(30) Priorität: 07.01.2005 DE 102005000890
(43) Veröffentlichungstag der Anmeldung: 19.09.2007
(73) Patentinhaber: Continental Automotive GmbH, 30165 Hannover (DE)
(72) Erfinder: HIRTH, Peter, 51503 Rösrath (DE); BRÜCK, Rolf, 51429 Bergisch Gladbach (DE); HÄRIG, Thomas, 43819 Neunkirchen-Seelscheid (DE)
(86) Internationale Anmeldenummer: PCT/EP2006/000717
(87) Internationale Veröffentlichungsnummer: WO 2006/072606

(56) Entgegenhaltungen:
- EP-A- 1 317 950
- EP-A1- 1 205 602
- DE-A1- 4 141 580
- US-A1- 2004 194 440

## Beschreibung

Die vorliegende Erfindung betrifft eine Faserlage, die geeignet für den Einsatz in einer Abgasanlage einer mobilen Verbrennungskraftmaschine ist. Außerdem wir ein Partikelfilter für den gleichen Einsatz vorgeschlagen. Die Erfindung betrifft zudem ein Verfahren zum Entfernen von Partikeln aus dem Abgas einer Verbrennungskraftmaschine mit einer gasdurchlässigen Filterlage.

Zur Reduktion von Partikel-Emissionen aus Abgasen von Verbrennungsprozessen sind Partikelfallen bekannt, welche aus einem keramischen Substrat aufgebaut sind. Diese weisen Kanäle auf, so dass das zu reinigende Abgas in die Partikelfalle einströmen kann. Benachbarte Kanäle sind wechselseitig verschlossen, so dass das Abgas auf der Eintrittseite in den Kanal eintritt, zwangsweise durch eine keramische Wand hindurchtritt und entlang eines benachbarten Kanals auf der Aufstrittsseite wieder entweicht. Derartige Filter erreichen eine Effektivität von ca. 95 % über die gesamte Breite der auftreffenden Partikelgrößen.

Zusätzlich zu unerwünschten chemischen Wechselwirkungen der Partikel bzw. des Rußes mit Additiven und speziellen Beschichtungen, stellt die sichere Regeneration eines solchen Filters im Abgassystem eines Automobils immer noch ein Problem dar. Die Regeneration der Partikelfalle ist erforderlich, weil aufgrund der zunehmenden Ansammlung von Partikelteilchen in den zu durchströmenden Kanalwänden der Druckverlust über den Filter bzw. der Staudruck davor stetig steigt, was negative Auswirkungen auf die Motorleistung hat. Die Regeneration umfasst im in der Regel ein kurzzeitiges Aufheizen der Partikelfalle bzw. der darin angesammelten Partikel, so dass die Rußpartikel in gasförmige Bestandteile umgesetzt werden. Dies kann beispielsweise dadurch erreicht werden, dass mit Hilfe einer vorgeschalteten exothermen Reaktion (z. B. Oxidation von zusätzlich in die Abgasleitung eingespritzten Kraftstoff: "Nachverbrennung") das Abgas kurzzeitig die Temperaturen erreicht, die ausreichen, um die in der Partikelfalle haftenden Partikel umzuwandeln. Diese hohe thermische Beanspruchung der Partikelfalle hat allerdings negative Auswirkungen auf die Lebensdauer. Zudem ist unter Umständen eine Überwachung des Verstopfungsgrades der Partikelfalle erforderlich, um eine solche thermische Regeneration nur zu den erforderlichen Zeitpunkten zu initiieren.

Zur Vermeidung dieser diskontinuierlichen und thermisch verschleißfördernden Regeneration wurde ein System zur kontinuierlichen Regeneration von Filtern bzw. Partikelfallen entwickelt (CRT: "Continuous regeneration trap"). In einem solchen System werden die Partikel bei Temperaturen bereits oberhalb von 200°C mittels Oxidation mit NO₂ verbrannt. Das hierzu erforderliche NO₂ wird häufig durch einen Oxidationskatalysator erzeigt, der stromaufwärts vor der Partikelfalle angeordnet ist. Hierbei stellt sich jedoch grade im Hinblick auf die Anwendung bei Kraftfahrzeugen mit Diesel-Kraftstoff das Problem, dass nur ein unzureichender Anteil von Stickstoffinonoxid (NO) im Abgas existiert, welcher zu dem gewünschten Stickstoffdioxid (NO₂) umgewandelt werden kann. In sofern ist es unter Umständen erforderlich, NO bzw. NO₂-hervorbringende Substanzen bzw. Additive hinzuzugeben (z.B. Ammoniak), die schließlich eine kontinuierliche Regeneration der Partikelfalle im Abgassystem ermöglichen.

Diese grundlegenden Überlegungen haben ein neues Filter-Konzept hervorgebracht, welches im wesentlichen unter dem Begriff "offenes Filtersystem" bzw. "PM-Kat" bekannt geworden ist. Diese offenen Filtersysteme zeichnen sich dadurch aus, dass auf ein konstruktives, wechselseitiges Verschließen der Filterkanäle verzichtet werden kann. Dabei wird vorgesehen, dass die Kanalwände zumindest teilweise aus porösem Material aufgebaut sind und dass die Strömungskanäle des offenen Filters Umlenk- und/oder Leitstrukturen aufweisen. Diese Einbauten bzw. Mikrostrukturen in den Kanälen bewirken, dass die Strömung bzw. die drin enthaltenen Partikel hin zu den Bereichen aus porösem Material gelenkt werden. Dabei hat sich überraschenderweise herausgestellt, dass die Partikel durch Interception und/oder Impaktion an und/oder in der porösen Kanalwand haften bleiben. Für das Zusammenkommen dieser Wirkung sind die Druckunterschiede im Strömungsprofil des strömenden Abgases von Bedeutung. Durch die Umlenkungen bzw. Mikrostrukturen können zusätzlich lokale Unterdruck- oder Überdruckverhältnisse generiert werden, die zu einem Filtrationseffekt durch die poröse Kanalwand hindurchführen, weil die obengenanten Druckunterschiede ausgeglichen werden müssen.

Die Partikelfalle ist dabei im Gegensatz zu dem bekannten geschlossenen Sieb- oder Filtersystemen "offen", weil keine Strömungssackgassen vorgesehen sind bzw. (zumindest fast) jeder Kanal einen zwar variierenden, schließlich aber auch frei durchströmbaren Querschnitt hat. Diese Eigenschaft kann auch zur Charakterisierung derartiger Partikelfilter dienen, so dass beispielsweise der Parameter "Strömungsfreiheit" zur Beschreibung geeignet ist. Eine ausgiebigere Beschreibung derartiger "offener" Filterelemente geht beispielsweise aus den Dokumenten DE 201 17 873, WO 02/00326, WO 01/92692, WO 01/80978, deren Offenbarungsinhalt hiermit vollständig zum Gegenstand der vorliegenden Beschreibung gemacht wird und nachfolgend auch zur näheren Charakterisierung derartiger Filterelemente im Zusammenhang mit der hier vorliegenden Erfindung herangezogen werden kann.

Die Bereitstellung von geeigneten Materialen für die porösen Kanalabschnitte muss mit einer Vielzahl von Faktoren abgestimmt werden, insbesondere Material, Korrosionsbeständigkeit, Temperaturbeständigkeit, Fertigungseignung, Filtereffektiviät. So sind beispielsweise auch metallische Faserlagen vorgeschlagen worden, die zur Erfüllung einiger der im Automobilbau erforderlichen Faktoren mit einer Schutzhülle ausgestaltet wurden. Diese werden z.B. in der DE 101 53 283 oder der WO 03/038248 beschrieben.

Ferner ist aus der EP 1 317 950 A ein Filtermedium, umfassend wenigstens eine erste und eine zweite Schicht bekannt, wobei die Schichten Fasern aufweisen.

In der EP 1 205 602 A1 ist eine Faserlage offenbart für den Einsatz in einer Abgasanlage einer mobilen Verbrennungskraftmaschine, wobei der Faserdurchmesser in Richtung der Faserlagedicke variiert.

Die bekannten "offenen Filtersysteme" bzw. die hierbei eingesetzten Filterlagen haben sich in der Vergangenheit bereits sehr gut bewährt. Besonders hervorzuheben sind dabei der geringe Druckverlust sowie die Möglichkeit, derartige Filtersysteme relativ nahe zur Verbrennungskraftmaschine anzuordnen, wo die Partikelfallen üblicherweise einer erhöhten Temperatur ausgesetzt sind. Gleichwohl soll hier eine Möglichkeit aufgezeigt werden, die bekannten Partikelfilter im Hinblick auf ihre Reinigungswirkung-noch effektiver zu gestalten. Außerdem soll eine Faserlage bzw. Filterlage bereitgestellt werden, die kostengünstig auch im Rahmen einer Serienfertigung herzustellen sind und sich für den Einsatz in metallischen Partikelfallen eigenen, so dass sie auch den hohen thermischen und dynamischen Beanspruchungen im Abgassystem eines Automobils dauerhaft standhalten.

Diese Aufgaben werden gelöst durch eine Faserlage bzw. einen Partikelfilter gemäß dem jeweils dazu unabhängig formulierten Vorrichtungsanspruch sowie einem Verfahren zum Entfernen von Partikeln nach dem unabhängig formulierten Verfahrensanspruch. Weitere vorteilhafte Ausgestaltungen der Vorrichtungen und Verfahren sind in den jeweils abhängigen Ansprüchen beschrieben. In diesem Zusammenhang sei darauf hingewiesen, dass die einzeln in den Patentansprüchen angegebenen Merkmale in beliebiger, technologisch sinnvoller, Weise miteinander kombiniert werden können, und weitere vorteilhafte Ausgestaltungen der Erfindung aufzeigen.

Die erfindungsgemäße Faserlage ist geeignet für den Einsatz in einer Abgasanlage einer mobilen Verbrennungskraftmaschine und umfasst einen Verbund aus Fasern. Sie weist eine Lagendicke auf, die sich von einer Fläche der Faserlage hin zu einer gegenüberliegenden Fläche erstreckt. Die Faserlage ist dabei anhand wenigstens einer der folgenden Parameter charakterisierbar: Porosität, Faserdurchmesser. Zu-mindest einer der genannten Parameter weist in Richtung der Lagendicke variierende Beträge auf, wobei ein Extremum dieser Beträge von den Flächen der Faserlage entfernt vorliegt. Hierbei ist die Variation der Beträge im Wesentlichen symmetrisch zur Mitte der Lagendicke ausgebildet. Das Extremum stellt einen Minimalwert dar. Die Foserlage ist mit einer veriierender Porosität ousgestaltet und die Porosität ist am geringoten in einem innen liegenden zentralen Bereich der Feserlage.

Mit "Fasern" sind hierbei langgestreckte Elemente zu verstehen, wobei deren Faserlänge ein Vielfaches des Faserdurchmessers beträgt. Die Fasern sind zu einer flächigen Lage miteinander verbunden sind. Der Verbund kann geordneter oder chaotischer Natur sein. Beispiele für geordnete Verbände sind Gestricke, Gewebe, Gitter. Ein Beispiel für einen chaotischen Verbund ist eine Gewirr-Lage. Die Fasern können in einem direkten Stoffschluss vorliegen, es ist aber auch möglich, dass die Fasern über Zusatzmittel miteinander fügetechnisch verbunden sind. Die Fasern bzw. Faserlagen sind aus einem hochtemperaturfesten und korrosionsbeständigen Material, so dass sie den Umgebungsbedingungen in einer Abgasanlage dauerhaft standhalten können. Wichtige Größen zur Beschreibung der Fasern sind Faserlänge, Faserdurchmesser und Faserartanteil. Bevorzugt liegt die Faserlänge bei derartigen Fasern in einem Bereich von 0,05 bis 0,4 mm [Millimeter]. Der Faserdurchmesser liegt üblicherweise in einem Bereich kleiner 0,09 mm, bevorzugt in einem Bereich von 0,015 bis 0,05 mm. Die Anordnung der Fasern zueinander lässt sich unter anderem durch die Porosität beschreiben. Mit Porosität ist dabei der Anteil frei durchströmbarer Bereiche in einem Querschnitt der Faserlage gemeint. Die Porosität liegt üblicherweise in einem Bereich von 50 % bis 90 %. Dabei bildet der Verbund aus Fasern in der Regel Hohlräume, Öffnungen bzw. Poren, deren maximale Erstreckung im Bereich von 0,001 .bis 0,1 mm liegt und mit Berücksichtigung der zu entfernenden Partikel ausgewählt werden kann. Ein weiterer Parameter ist der so genannte Faserartanteil, wobei hiermit für den Fall des Einsatzes unterschiedlicher Faserarten bzw. -ausgestaltungen zur Bildung der Faserlage beschrieben wird, zu welchem Anteil die Fasern vorliegen. Weist die Faserlage beispielsweise einerseits eine Anzahl Fasern (Fₖₗₑᵢₙ) mit kleinem Faserdurchmesser und andererseits eine Anzahl Fasern (F_{groß}) mit größerem Faserdurchmesser auf, so ergibt sich der Faserartanteil aus dem Verhältnis von Fₖₗₑᵢₙ bzw. F_{groß} zu (Fₖₗₑᵢₙ+F_{groß}). Bevorzugt variiert der Faserartanteil einer Faserart über die Lagendicke im Bereich von mindestens 10 %, insbesondere 20 %.

Bei der hier vorgeschlagenen Faserlage variiert nun zumindest einer der charakteristischen Parameter in Richtung der Lagendicke, wobei ein Extremum im Inneren der Faserlage vorliegt. Dabei ist unter einer "Faserlage" tatsächlich nur der Verbund von Fasern gemeint, zusätzliche Bauteile anderer Materialform (wie zum Beispiel Blechfolien) zur Herstellung einer Filterlage sind nicht erfasst. Damit ist nicht gemeint, dass solche Bauteile nicht vorhanden sein können, sie werden nur bei der Betrachtung der variierenden Parameter nicht betrachtet. Davon unberührt ist die Ausgestaltung der Faserlage mit benachbart zueinander angeordneten, verschiedenartigen Fasern bzw. Faserschichten, die zur Einstellung des gewünschen Faserlagen-Parameters vorgesehen sind. Damit ist nun insbesondere gemeint, dass die Faserlage in Randschichten anders aufgebaut ist, als in zentralen Schichten.

Unter einem "Extremum" wird ein Minimalwert des betrachteten Parameters verstanden. Bevorzugt ist dabei eine Variation der Beträge, die im wesentlichen symmetrisch zur Mitte bzw. dem Zentrum der Lagedicke ausgebildet ist. Das hat den Vorteil, dass die Faserlage hinsichtlich ihrer Filterwirkung von beiden Flächen her gleichwirkend ausgestaltet ist und somit unter fertigungstechnischen Gesichtspunkten leichter herzustellen, zu transportieren und weiterzuverarbeiten ist. Ganz besonders bevorzugt ist es, wenn die jeweiligen Extrema im wesentlichen in einer gemeinsamen Querschnittsebene der Faserlage angeordnet sind, also alle in etwa den gleichen Abstand zur Oberfläche der Faserlage aufweisen.

Mit der hier vorgeschlagenen Ausgestaltung der Faserlage werden in verschiedenen Tiefen der Faserlage unterschiedliche Strömungswiderstände für einen hindurchströmenden Gasstrom bzw. darin mitgeführten Partikel bereitgestellt. Dies führt dazu, dass der Gasstrom entsprechend den äußeren Strömungskräften bzw. Druckunterschieden in verschiedene Schichten bzw. Tiefen der Faserlage vordringt. Diese Tatsache kann ausgenutzt werden, um eine effektivere Reinigung der Gasströme vorzunehmen, wobei gleichzeitig ein unerwünschter Anstieg des Druckverlustes vermieden wird.

Gemäß einer vorteilhaften Weiterbildung der Faserlage umfasst diese metallische Fasern. Bevorzugt kommen hierbei Eisenwerkstoffe zum Einsatz, die einen Anteil von zumindest einem der folgenden Legierungselemente aufweist: Aluminium, Chrom, Nickel. Der Werkstoff selbst ist bevorzugt auch sinterfähig, das bedeutet, dass sowohl die Faser selbst aus Sinterwerkstoff bzw. mit dem Verfahren Sintern hergestellt ist, als auch, dass die Fasern miteinander fügetechnisch verbunden wurden, wobei hier das Verfahren Sintern eingesetzt wurde.

Weiter wird vorgeschlagen, dass die Faserlage in Richtung der Lagendicke mehrere Teilbereiche aufweist, in denen wenigstens einer der Parameter konstant ist. Das bedeutet mit anderen Worten, dass die Faserlage schichtartig aufgebaut ist, wobei innerhalb einer solchen Schicht der betrachtete Parameter im wesentlichen konstant ist. Eine solche schichtartig aufgebaute Faserlage kann grundsätzlich auch ein anderes Fasermaterial aufweisen, wobei die Schichten schließlich miteinander gefügt sind. Bevorzugt ist jedoch die Ausgestaltung einer Faserlage mit einem Werkstoff, wobei die Fasern selbst bzw. ihre Anordnung zueinander so ausgestaltet ist, dass sich Schichten ausbilden. Das hat den Vorteil, dass ein stabilerer und dauerhafter Zusammenhalt der Schichten sichergestellt ist, was bei Schichten mit unterschiedlichen Materialien bzw. bei Schichten, die durch zusätzliche Fügewerkstoffe miteinander verbunden sind, nicht zwangsläufig gegeben ist.

Bei einem solchen schichtartigen Aufbau der Faserlage ist es besonders vorteilhaft, dass eine ungerade Anzahl von Teilbereichen vorliegt, wobei ein zentral angeordneter Teilbereich den extremen Betrag des Parameters aufweist. Bevorzugt weist eine solche Faserlage drei (ggf. auch fünf) Teilbereiche auf, wobei die Parameter in den Randschichten im wesentlichen gleich gewählt sind und ein hier-von abweichender Betrag des Parameters im zentral angeordneten Teilbereich vorliegt. Der Parameter kann dabei im Grenzbereich der einzelnen Teilbereiche sprunghaft oder kontinuierlich seinen Betrag ändern.

Grundsätzlich liegt die Lagendicke einer derartigen Faserage bzw. Filterlage in einem Bereich kleiner 3,0 mm, und bevorzugt in einem Bereich von 0,1 mm bis 2,0 mm. Gute Ergebnisse für die mobile Anwendung haben Faserlagen mit einer Lagendicke im Bereich von 0,3 mm bis 0,5 mm hervorgebracht, wobei Teilbereiche mit einer Dicke von ca. 0,1 mm ausgebildet wurden. Die Aufteilung der Lagendicke in verschiedene Teilbereiche kann, muss aber nicht zu gleichen Anteilen erfolgen.

Bei der erfindugsgemäßer Filserlage, wobei die Porosität der Faserlage in einem innen liegenden, insbesondere zentralen, Bereich der Faserlage am geringsten ist, liegt dort also der höchste Strömungswiderstand für einen hindurchströmenden Gasstrom vor. Dies führt dazu, dass zum vollständigen Durchströmen der Faserlage ein erheblicher Druckunterschied vorliegen muss, während das Hindurchströmen von Gasen im Randbereich bereits bei niedrigeren Druckunterschieden stattfinden kann. Außerdem ist zu berücksichtigen, dass sich diese Teilbereiche reduzierter Porosität erfahrungsgemäß zuerst mit Feststoffen bzw. Partikeln zusetzen, so dass diese dann gegebenenfalls teilweise verstopft sind, bis die Partikel in gasförmige Bestandteile umgewandelt sind und der Faserbereich regeneriert ist. Dennoch hat die Faserlage üblicherweise an diesen Stellen noch eine Filterwirkung, weil das Abgas bzw. der Gasstrom noch durch die Randschichten der Faserlagen hindurchströmen kann und somit weiterhin gereinigt wird.

Für den Fall, dass der Faserdurchmesser über die Lagendicke der Faserlage variabel ausgestaltet ist, wird bevorzugt vorgeschlagen, dass das Extremum einen Minimalwert darstellt. Das heißt mit anderen Worten, dass in einem innen liegenden Teilbereich der Faserlage Fasern mit einem geringeren Faserdurchmesser vorliegen, als in den Randschichten. Tests haben gezeigt, dass die Effektivität der Fasern hinsichtlich ihrer Reinigungswirkung bzw. ihres Anlagerungspotentials für Partikel mit abnehmendem Faserdurchmesser steigt. Das bedeutet nun, dass hier eine Faserlage vorliegt, die in zentralen Bereichen eine besonders hohe Effektivität aufweist, während Randbereiche eine reduzierte Effektivität haben. So können die Fasern im zentralen Bereich beispielsweise mit einem Faserdurchmesser kleiner 50 µm [Mikrometer] bzw. sogar kleiner 25 µm eingesetzt werden, während im Randbereich beispielsweise Fasern mit einem Faserdurchmesser im Bereich von 50 µm bis 100 µm vorliegen können.

Weiterhin ist beispielsweise auch möglich, dass der Faserartanteil über die Lagendicke der Faserlage variabel ausgestaltet ist, wobei Fasern (Fklein) mit einem kleineren Faserdurchmesser und Fasern (Fgroß) mit einem größeren Faserdurchmesser miteinander vermengt bzw. verbunden sind. Besonders bevorzugt weisen die Fklein einen Faserdurchmesser im Bereich von 20-25 µm [Mikrometer] auf, während die Fgroß mit einem Faserdurchmesser im Bereich von 35-45 µm ausgeführt sind. Das Extremum des Parameters Faserartanteil liegt hier bevorzugt im Bereich von Fklein=ca. 0,3-0,4 zu Fgroß=ca. 0,7-0,6. Ein solcher Faserartanteil hat bereits vorteilhafte Ergebnisse im Hinblick auf die Partikelabscheidung gezeigt, wenn dieser über die Lagendicke im wesentlichen konstant gehalten ist. Weitere Vorteile lassen sich aber noch erreichen, wenn der Faserartanteil nahe wenigstens eines Randbereichs im Bereich von Fklein= 0,0-0,2 zu Fgroß= 1,0-0,8 liegt.

Darüber hinaus weisen zumindest ein Teil der Fasern über ihre Faserlänge einen variierenden Faserdurchmesser auf. Das bedeutet mit anderen Worten, dass die Faserlage nicht mit Fasern unterschiedlicher Ausgestaltungen hergestellt werden muss, sondern dass zumindest ein Teil der Fasern selbst mit variierendem Faserdurchmesser versehen sind. Dies Vereinfacht erheblich die Fertigung solcher Faserlagen mit variierenden Parametern, insbesondere im Fall der Serienfertigung.

In diesem Zusammenhang ist es besonders vorteilhaft, dass der Betrag des Faserdurchmessers in einem zentralen Abschnitt der Faser ein Extremum darstellt, insbesondere einen Minimalwert. Das heißt mit anderen Worten, dass Fasern bereitgestellt werden, die zwei dicke Enden und einen schlank ausgeführten Mittelabschnitt aufweisen. Diese können nun so miteinander zu einem Verbund angeordnet werden, dass beispielsweise die Abschnitte mit den gleichen Faserdurchmessern der Fasern benachbarte zueinander (insbesondere im wesentlichen in einer Querschnittsebene parallel zur Oberfläche) angeordnet sind und somit unterschiedliche Schichten der Faserlage ausgebildet werden.

Gemäß einem weiteren Aspekt der Erfindung wird ein Partikelfilter vorgeschlagen, der geeignet für den Einsatz in einer Abgasanlage einer mobilen Verbrennungskraftmaschine ist und mindestens eine Faserlage sowie mindestens eine zumindest teilweise strukturierte Folie umfasst. Die mindestens eine Faserlage sowie die mindestens eine zumindest teilweise strukturierte Folie bilden zusammen Kanäle eines Wabenkörpers, wobei wenigstens ein Teil der Kanäle mindestens eine Wabenstruktur aufweist. Bei dem erfindungsgemäßen Partikelfilter hat die mindestens eine Faserlage zumindest einen, in Richtung einer Lagendicke variierenden, Parameter aus der Gruppe Porosität und Faserdurchmesser. Dabei ist der Partikelfilter mit einer Faserlage, wie sie erfindungsgemäß vorstehend beschrieben wurde ausgestaltet.

Bei diesem Partikelfilter handelt es sich bevorzugt um ein sogenanntes "offenes. Filtersystem", wie es eingangs beschrieben wurde, wobei der Offenbarungsinhalt der genannte Veröffentlichungen DE 201 17 873, WO 02/00326, WO 01/92692, WO 01/80978 ergänzend zur nachfolgenden Beschreibung erläuternd herangezogen werden kann. Zur Regenerierung des erfindungsgemäßen Partikelfilters können alle derzeit bekannten, insbesondere kontinuierliche sowie diskontinuierliche, Verfahren eingesetzt werden, bevorzugt ist jedoch eine kontinuierliche Regeneration gemäß dem "CRT"-Verfahren.

Die Ausgestaltung des Partikelfilters mit einem Wabenkörper ist grundsätzlich bekannt. Dabei werden eine Vielzahl, im wesentlichen parallel zueinander angeordneter, Kanäle gebildet, die eine Eintrittsseite des Wabenkörpers mit einer Austrittseite des Wabenkörpers verbinden. Das zu reinigende Abgas strömt über die Eintrittsstirnseite ein und strömt als Teilabgasströme durch die Kanäle. Die Mirkostrukturen bewirken Druckunterschiede im Inneren des Wabenkörpers, so dass die Teilabgasströme die Faserlage zumindest teilweise durchdringen und dabei gereinigt werden. Solche Wabenkörper werden bevorzugt mit einer Zelldichte von wenigstens 100 cpsi, bevorzugt in einem Bereich von 150 cpsi bis 400 cpsi, ausgeführt (cpsi: "cells per square inch"; 1 cpsi entspricht 1 Kanal pro 6,4516 Quadratzentimeter). Die Kanäle werden üblicherweise jeweils von einem im Teilbereich der strukturierten Folie sowie einem Teilbereich der Faserlage begrenzt. Die Folie ist ebenfalls aus einem hochtemperaturfesten und korrosionsbeständigem Material, insbesondere metallisch. Sie ist mit einer Foliendicke kleiner 100 µm [Mikrometer] ausgeführt und weist bevorzugt eine sich wiederholende (Makro-) Struktur auf, z. B. eine Wellenform. Sowohl Folie als auch die Faserlage können zumindest teilweise mit einer oder verschiedenartigen Beschichtungen, gegebenenfalls auch mit katalytisch aktiven Material, versehen sein. Zur Gewährleitung eines dauerhaften Verbundes von Folien und Faserlagen sind diese miteinander verbunden, insbesondere verlötet oder verschweißt.

Gemäß einer Weiterbildung dieses Partikelfilters wird vorgeschlagen, dass die mindestens eine Mikrostruktur so in einem Kanal angeordnet ist, dass ein hindurchströmender Gasstrom hin zu der mindestens einen Faserlage gelenkt wird. Die Mikrostruktur kann hierfür als Leitfläche, Erhebung, Vorsprung etc. ausgebildet sein, um Druckunterschiede bzw. Anströmkanten bereitzustellen und somit eine Ablenkung des üblicherweise im Inneren des Kanals laminar strömenden Gasstroms hin zur Faserlage zu bewirken. Gemeinsam mit dem Gasstrom werden auch die mitgeführten Partikel hin zur Faserlage gelenkt, wo sie sich schließlich beim Durchdringen bzw. beim Kontakt mit der Faserlage ablagern. Die Verweilzeit der Partikel im Inneren des Kanals, der Faserlage bzw. des Partikelfilters wird nun solange aufrechterhalten, bis eine Umsetzung in gasförmige Bestandteile zumindest zu einem großen Teil stattgefunden hat. Hierfür ist es möglich, eine thermische Umsetzung sowie eine Umsetzung bzw. Regeneration mit Stickoxiden durchzuführen.

Insbesondere ist der Partikelfilter so gestaltet, dass die Mikrostruktur und die Faserlage einen Spalt bilden, der eine Spaltbreite kleiner 1,5 mm hat. Vorteilhafter Weise beträgt die Spaltbreite in etwa 1,0 mm oder liegt in einem Bereich zwischen 0,5 mm bis 0,8 mm. Grundsätzlich sei darauf hingewiesen, dass im Inneren eines Kanals mehrere Mikrostrukturen vorgesehen sein können, wobei weder innerhalb eines Kanals noch in benachbarten Kanälen der Spalt gleich ausgeführt sein muss. Die Vorsehung eines Spaltes stellt jedoch sicher, dass ein "offenes Filtersystem" vorliegt Damit wird zumindest ein Teil des durch den Kanal strömenden Gasstromes als "Bypass" an der Mikrostruktur vorbeigeführt, ohne die Faserlage vollständig zu durchdringen. Die Größe bzw. Form der Mikrostruktur hat erheblichen Einfluss auf die Strömungsumlenkung bzw. -ablenkung hin zur Faserlage bzw. hindurch.

Bei der hier vorgeschlagenen Ausgestaltung der Faserlage mit variierenden Parametern in Richtung der Lagendicke hat das zur Folge, dass ein Teil des Abgases bzw. Gasstromes die Faserlage durchdringt und auf diese Weise in einen benachbarten Kanal gelangt, während ein anderer Teil an der Mikrostruktur vorbei weiter den Kanal entlang strömt. Die Ausgestaltung der Faserlage mit einer Randschicht, die einen geringeren. Strömungswiderstand für den Gasstrom darstellt als zentral angeordnete Schichten ermöglicht nun, dass dieser "Bypass"-Teilgasstrom wenigstens teilweise die Randschicht durchdringt und damit ebenfalls ein Teil der mitgeführten Partikel an den Fasern abgelagert werden. Dies führt zu einer Effektivitätssteigerung des Partikelfilters im Hinblick auf die Entfernung von Partikeln, insbesondere Ruß, aus einem Gasstrom, insbesondere einem Abgas einer Verbrennungskraftmaschine.

Außerdem wird auch eine Abgasanlage einer Verbrennungskraftmaschine vorgeschlagen, die den erfindungsgemäßen Partikelfilter umfasst. Als Verbrennungskraftmaschine werden insbesondere solche Motoren verstanden, die ein Abgas produzieren, welches feste Partikel aufweist. Im besonderen Maße ist hierbei ein Dieselkraftstoff verbrennender mobiler Motor hervorzuheben.

Weiter wird auch ein Fahrzeug umfassend einen Partikelfilter der vorstehend beschriebenen Art vorgeschlagen. Fahrzeuge sind hier neben anderen Einsatzgebieten (Rasenmäher, Kettensägen, etc) als bevorzugte Verwendung genannt, da diesbezüglich gesetzliche Bestimmungen eine besonders effektive Reinigung der Abgase fordern. Dies gilt gerade für Personenkraftwagen und Lastkraftwagen.

Gemäß einem weiteren Aspekt der Erfindung wird ein Verfahren zum Entfernen von Partikeln aus einem Gasstrom mit einer gasdurchlässigen Filterlage vorgeschlagen, wobei die Filterlage in Richtung der Lagendicketeilbereiche mit einem Parameter unterschiedlicher Beträge aufweist. Dieser Parameter betrifft wenigstens die Porosität oder den Faserdurchmesser von Fasern der Filterlage. Bei dem Verfahren wird der Gasstrom in Teilgasströme unterteilt, welche jeweils durch verschiedene Teilbereiche der Filterlage hindurchgeführt werden. Das bedeutet mit anderen Worten, dass die Teilgasströme zwar gleichwohl einen bzw. einzelne Teilbereiche der Filterlage gemeinsam durchströmen, schließlich jedoch eine Aufteilung vorgenommen wird, wobei einer der Teilgasströme andere und/oder weitere Teilbereiche der Filterlage durchströmt. Damit soll insbesondere zum Ausdruck gebracht werden, dass eine Separierung in die jeweiligen Teilgasströme nicht in Richtung der Fläche sondern der Lagendicke der Filterlage erfolgt. Insbesondere heißt das, dass ein Teilgasstrom die gasdurchlässige Filterlage vollständig durchströmt, während ein anderer Teil des Gasstromes nur in die gasdurchlässige Filterlage eindringt, zur selben Seite bzw. Fläche hin aber wieder austritt ohne die Filterlage komplett zu durchströmen. Die Teilgasströme unterscheiden sich dabei beispielsweise hinsichtlich ihrer Strömungsrichtung, ihrer Strömungsgeschwindigkeit, ihrer Temperatur, ihrer Beladung mit Partikeln, etc..

Wie bereits zuvorstehend ausgeführt, ist es besonders vorteilhaft, wenn ein Teilgasstrom nur durch mindestens eine Randschicht der Filterlage hindurchgeführt wird, während ein weiterer Teilgasstrom alle Teilbereiche der Filterlage durchströmt. Hierbei sei angemerkt, dass mit Filterlage eine Faserlage der erfindungsgemäßen Art gemeint ist.

Gemäß einer weiteren Ausgestaltung des Verfahrens wird der Teilgasstrom, der nur die Randschicht durchströmt, entlang einer Filterstrecke durch die Randschicht geführt, wobei diese Filterstrecke mindestens der Lagendicke der Filterlage entspricht. Das bedeutet, dass der Teilgasstrom, welcher die Filterlage nicht vollständig durchströmt ("Bypass"), über mindestens die gleiche Strecke des Strömungsweges mit dem Filtermaterial in Kontakt ist. Wie bereits ausgeführt, können sich die Schichten bzw. Teilbereiche der Filterlage hinsichtlich ihrer Effektivität unterscheiden, wobei durch die Gewährleistung der hier beschriebenen Filterstrecke eine zumindest anteilige Filterwirkung für dieses, nur in den Randschichten durch das Filtermaterial hindurchgeführte Abgas bewirkt ist. Bevorzugt wird die Filterstrecke um den Faktor verlängert, wie sich die benachbarten Schichten hinsichtlich ihrer Effektivität oder eines anderen Parameters unterscheiden. Die Filterstrecke kann durch die gezielte Bereitstellung von Druckunterschieden oder gezwungenen Strömungsprofilen bewirkt werden, beispielsweise durch die spezielle Ausgestaltung von Mikrostrukturen in einem Strömungskanal, der von einer solchen gasdurchlässigen Filterlage begrenzt wird.

Schließlich wird auch vorgeschlagen, dass die quantitative Bestimmung der jeweiligen Teilgasströme durch die Filterlage selbst bewirkt wird. Das heißt mit anderen Worten, dass die Ausgestaltung der Filterlage selbst Mittel aufweist, die eine Zerlegung des gesamten Gasstromes in Teilgasströme vornehmen. Diese Mittel können durch unterschiedliche Ausgestaltungen der Parameter der Faserlage realisiert werden, also auch inhärent sein. So stellt beispielsweise die Ausgestaltung der Filterlage mit unterschiedlichen Strömungswiederständen bzw. Porositäten in Richtung der Lagendicke eine Möglichkeit dar, eine solche quantitative Bestimmung bzw. Aufteilung zu bewirken.

Das hier beschriebene Verfahren lässt sich besonders gut mit einer der vorgeschlagenen erfindungsgemäßen Faserlagen bzw. dem einer vorgeschlagenen Ausgestaltung des erfindungsgemäßen Partikelfilters verwirklichen.

Die Erfindung sowie das technische Umfeld der Erfindung werden nachfolgend anhand der Figuren näher erläutert. Dabei zeigen die Figuren auch besonders bevorzugte Ausführungsformen des erfindungsgemäßen Partikelfilters bzw. der erfindungsgemäßen Faserlage, auf die die Erfindung jedoch nicht begrenzt ist.

Es zeigen:
- Fig. 1: schematisch eine Filterlage geeignet für das erfindungsgemäße Verfahren,
- Fig. 2: eine Ausführungsform einer erfindungsgemäßen Faserlage;
- Fig. 3: schematisch eine weitere Ausgestaltung der erfindungsgemäßen Faserlage;
- Fig. 4: schematisch und im Detail einen Kanal einer Ausführungsform des Partikelfilters;
- Fig. 5: schematisch und perspektivisch ein Fahrzeug mit einer Abgasanlage; und
- Fig. 6: schematisch den Aufbau eines Partikelfilters.

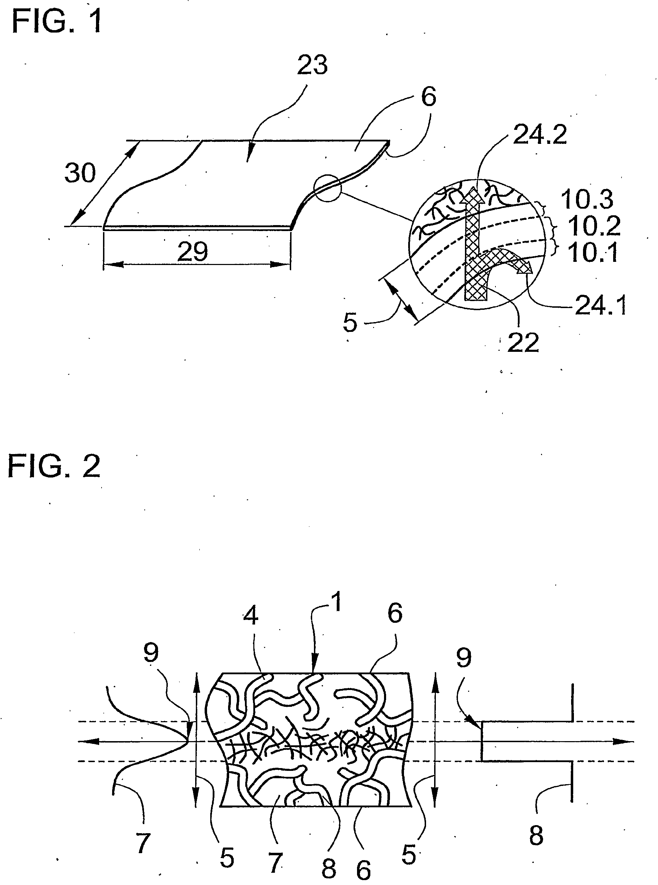

Fig. 1 zeigt schematisch und perspektivisch eine Filterlage 23, die üblicherweise mit einer vorgegebenen Lagenlänge 29 und einer Lagenbreite 30 bereitgestellt wird. Die Filterlage 23 (bzw. auch die Faserlage 1) wird durch zwei Flächen 6 begrenzt, die schließlich eine Lagendicke 5 der Filterlage 23 begrenzen. In Richtung dieser Lagendicke 5 weist die gasdurchlässige Filterlage 23 mehrere Teilbereiche 10 (10.1, 10.2, 10.3) auf, welche sich aufgrund von die Filterlage 23 beschreibenden Parametern unterscheiden. Für die Filterlage 23 charakteristische Parameter sind beispielsweise die Porosität 7 oder der Faserdurchmesser 8 von Fasern 4, falls die Filterlage 23 als Faserlage 1 ausgeführt ist.

Wie aus der Detailansicht zu erkennen ist, wird ein auf die Filterlage 23 auftreffender Gasstrom 22 teilweise in innere Bereiche der Filterlage 23 eindringen. Nachdem der gesamte Gasstrom 22 den ersten Teilbereich 10.1 durchdrungen hat, stößt er auf den zweiten Teilbereich 10.2. Dieser Teilbereich 10.2, der im zentralen Bereich angeordnet ist, weist nun eine Porosität und/oder einen Faserdurchmesser auf, der für den Teil des Gasstromes 22 nicht durchdringbar ist. Dieser Teilgasstrom 24.1 wird demnach an dem Übergang hin zum zweiten Teilbereich 10.2 abgelenkt und strömt wieder durch den ersten Teilbereich 10.1 hindurch und verlässt die Filterlage 23. Ein anderer Teilgasstrom 24.2, der z. B. eine höhere Strömungsgeschwindigkeit, eine geringere Beladung mit Partikeln etc. aufweist, durchdringt jedoch auch den zweiten Teilbereich 10.2. Anschließend gelangt der Teilgasstrom 24.2 in den benachbarten Teilbereich 10.3, durchströmt diesen und tritt auf der gegenüberliegenden Fläche 6 wieder aus. Sowohl der erste Teilgasstrom 24.1 als auch der zweite Teilgasstrom 24.2 war in Kontakt mit mindestens einem ersten Teilbereich 10.1 der Filterlage 23. Während der erste Teilgasstrom 24.1 jedoch nur einen Teilbereich 10.1 durchströmte, wurde der Teilgasstrom 24.2 durch alle Teilbereiche 10.1, 10.2, 10.3 hindurchgeführt. Die quantitative Bestimmung der Teilgasströme 24 erfolgte dabei durch die Filterlage 23 selbst, weil sie unterschiedliche Strömungswiderstände in ihren Teilbereichen 10 bereitstellt, die eine solche Aufteilung des Gasstromes 22 zur Folge hat.

Fig. 2 zeigt schematisch ein Detail einer Faserlage 1. Nahe den die Faserlage 1 begrenzenden Flächen 6 sind Fasern 4 mit einem ersten Faserdurchmesser 8 vorgesehen. In einem zentralen Bereich sind ebenfalls Fasern 4 vorgesehen, die jedoch einen anderen Faserdurchmesser 8 aufweisen. Die unterschiedlich ausgeprägten Fasern 4 sind miteinander fügetechnisch dauerhaft verbunden und bilden einen chaotischen Verbund, wobei gleichzeitig eine Porosität 7 realisiert wird. Neben dieser Detailansicht einer Faserlage 1 sind links und rechts schematisch Verläufe von Beträgen der Parameter Porosität 7 und Faserdurchmesser 8 über die Lagendicke 5 dargestellt.

Links in Figur 2 ist der Verlauf der Porosität 7 dargestellt. Im zentralen Bereich, also von den Flächen 6 entfernt, liegt ein Extremum 9 vor, die Porosität 7 ist dort am niedrigsten. Der Verlauf der Porosität 7 ist im wesentlichen symmetrisch zu einer mittleren Schicht der Faserlage 1 und mit kontinuierlichen Übergängen ausgestaltet.

Im rechten Drittel von Figur 2 ist in ähnlicher Weise der Verlauf des Faserdurchmessers 8 über die Lagendicke 5 dargestellt. Aufgrund der Tatsache, dass im zentralen Bereich Fasern 4 mit einem geringen Faserdurchmesser 8 vorgesehen sind und in den Randschichten Fasern 4 mit einem dickeren Faserdurchmesser 8, bildet sich der sprunghafte Verlauf der Faserdurchmesser 8 aus, wie er rechts dargestellt ist. Dabei wird ein Extremum 9 wiederum im zentralen Bereich gebildet.

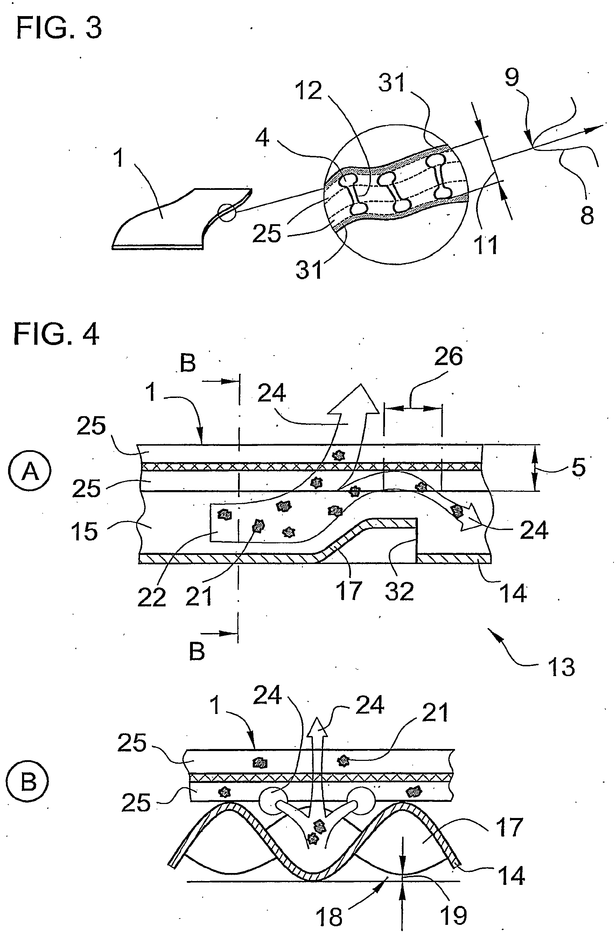

Fig. 3 zeigt wieder schematisch eine Faserlage 1 mit einem besonders herausgestellten Detail. Dieses Detail zeigt die Faserlage 1 mit einer Beschichtung 31 auf beiden Flächen 6 der Faserlage 1, wobei sich die Beschichtung selbstverständlich auch in innere Bereiche oder sogar auf alle freien Oberflächen der Fasern 4 erstrecken kann. Die Faserlage 1 ist hier als geordneter Verbund von Fasern 4 ausgestaltet, wobei die Fasern 4 über ihre Faserlänge 11 mit einem variierenden. Faserdurchmesser 8 ausgeführt sind. Die Fasern 4 weisen dazu einen zentralen Abschnitt 12 auf, in dem der Faserdurchmesser 8 ein Extremum 9 erreicht, wie dies auch rechts schematisch wieder aus dem dargestellten Verlauf erkennbar ist. Bei dem hier gezeigten Beispiel sind die Faserdurchmesser 8 nahe jeweils einer Fläche 6 unterschiedlich ausgeführt, so dass hier ein nicht-symmetrischer Verlauf der Faserdurchmesser 8 über die Faserlänge 9 bzw. die Lagendicke 5 vorliegt. Die gleichartige, geordnete Orientierung bzw. Ausrichtung der Fasern 4 bewirkt nun, dass wiederum Randschichten 25 gebildet sind, die eine Ausgestaltung der Faserlage 1 mit variierenden Parametern in Richtung der Lagendicke 5 bereitstellen. Auch bei der hier dargestellten Ausgestaltung der Fasern 4 ist es auch möglich, weitere Fasern 4 (zum Beispiel anderen Materials oder mit konstantem Faserdurchmesser) in einem Teilbereich der Faserlage 1 vorzusehen, die in den Faserverbund integriert werden.

Fig. 4 zeigt schematisch und in Teilquerschnitten den Aufbau eines erfindungsgemäßen Partikelfilters 13, der für den Einsatz in einer Abgasanlage einer mobilen Verbrennungskraftmaschine geeignet ist. Der Partikelfilter 13 umfasst eine Faserlage 1 mit mindestens einem, in Richtung einer Lagendicke 5 variierenden, Parameter aus der Gruppe Porosität und Faserdurchmesser sowie mindestens eine zumindest teilweise strukturierte Folie 14, die zusammen eine Mehrzahl von Kanälen 15 bilden. In der dargestellten Ausführungsform weist die Folie 14 Mikrostrukturen 17 auf. Im oberen Teil von Fig. 4 und mit "A" gekennzeichnet, ist ein solcher Kanal 15 im Detail und als Längsschnitt dargestellt. Darunter und mit "B" gekennzeichnet ist ein Querschnitt durch den Kanal 15 schematisch dargestellt, wobei die Querschnittsebene in der Darstellung "A" unter Angabe der Betrachtungsrichtung eingezeichnet ist.

Die Wirkungsweise wird nachfolgend genauer erläutert Ein Partikel 21 mitführender Gasstrom 22, insbesondere ein Abgasstrom, strömt durch den Kanal 15 und trifft auf die Mikrostruktur 17, die in den Kanal 15 hineinragt. Dadurch wird bewirkt, dass der Gasstrom 22 hin zu der Faserlage 1 gelenkt wird. Die Faserlage 1 weist Randschichten 25 und eine zentrale Schicht im Inneren auf. Während der gesamte Gasstrom 22 noch die erste Randschicht 25 durchdringt, stellt die mittlere Schicht aufgrund ihrer Parameter (wie beispielsweise Porosität und/oder Faserdurchmesser) für einen Teilgasstrom 24 einen solchen Strömungswiderstand dar, dass er diese Schicht nicht durchdringt. Vielmehr strömt dieser abgelenkte Teilgasstrom 24 entlang eine Filterstrecke 26 durch den Randbereich 25 weiter bevor er schließlich wieder zurück in den Kanal 15 eintritt. Ein anderer Teil des Gasstromes 22 durchdringt diese mittlere Schicht und auch die sich daran anschließende Randschicht 25 und tritt auf der gegenüberliegenden Fläche wieder aus. Beim Durchströmen des Gasstromes 22 durch die Faserlage 1 lagern sich die mitgeführten Partikel 21 an den Fasern 4 der Faserlage 1 an, so dass der Gasstrom 22 schließlich gereinigt wird.

Zur Strömungsumlenkung bzw. zur Erzielung von Druckunterschieden in benachbarten Kanälen 15 sind die Mikrostrukturen 17 vorgesehen. Diese Mikrostrukturen 17 umfassen Vorsprünge, die in das Material bzw. die Struktur der Folie 14 eingearbeitet sind. Dabei können reine Umformschritte eingesetzt werden, es ist jedoch auch möglich, solche Mikrostrukturen 17 durch Stanzen oder andere trennende Verfahren herzustellen, wobei in der Regel Öffnungen 32 in die Folie 14 eingebracht werden. Dadurch wird auch eine strömungstechnische Verbindung von benachbarten Kanälen 15 bereitgestellt, so dass das zu reinigende Abgas immer wieder vermischt werden kann. Die Mikrostrukturen 17, die hier als Leitflächen dargestellt sind, bilden mit der Faserlage 1 einen Spalt 18, der eine vorgegebene Spaltbreite 19 aufweist. Die Ausgestaltung der Mikrostruktur 17 und die Ausgestaltung der Faserlage 1 sowie die Charakteristika der Strömung des Gasstromes 22 bewirken nunmehr eine quantitative Aufteilung in verschiedene Teilgasströme 24.

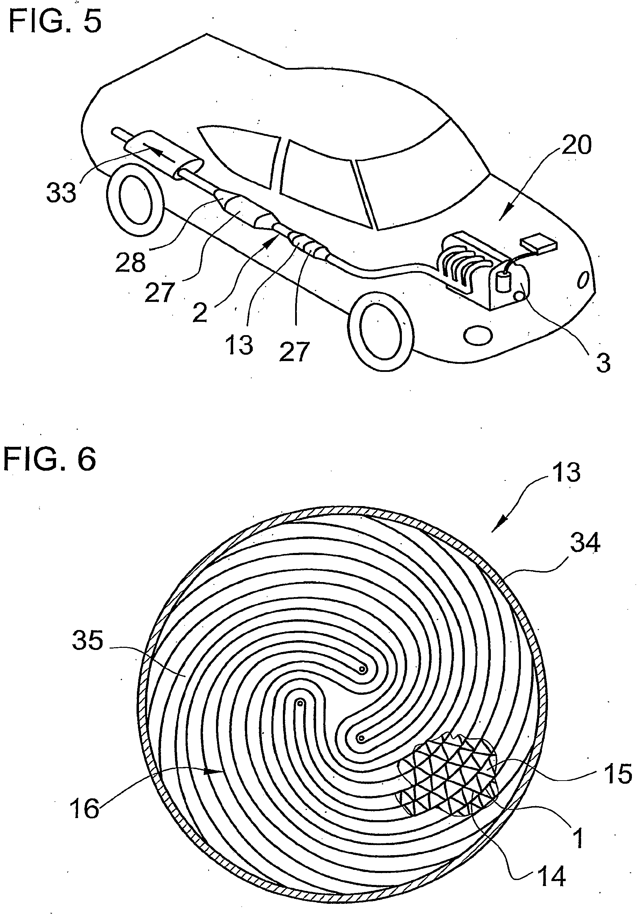

Figur 5 zeigt schematisch und perspektivisch ein Fahrzeug 20 umfassend eine Verbrennungskraftmaschine 3 mit einer dazugehörigen Abgasanlage 2. Das in der Verbrennungskraftmaschine 3 generierte Abgas durchströmt die Abgasanlage in einer bevorzugten Strömungsrichtung 33 und wird nach der Reinigung an die Umgebung abgegeben. Die Abgasanlage 2 umfasst eine Abgasleitung 28, in der hintereinander eine Mehrzahl verschiedener Abgasbehandlungseinrichtungen vorgesehen sind. Hier in dem vorliegenden Fall werden hintereinander folgende Komponenten durchströmt: Oxidationskatalysator 27, Partikelfilter 13, Katalysator 27. Grundsätzlich kann der Partikelfilter 13 jedoch in jede Kombination von bekannten Abgashehandlungseinrichtungen integriert werden. Die hier gezeigte Hintereinanderschaltung eines Oxidationskatalysators 27 und eines Partikelfilters 13 ermöglicht in besonderem Maße eine kontinuierliche Regeneration des Partikelfilters nach dem eingangs beschriebenen "CRT"-Prinzip.

Fig. 6 zeigt schematisch eine stirnseitige Ansicht eines Partikelfilters 13, der ein Gehäuse 34 und einen darin befindlichen Wabenkörper 16 umfasst. Der Wabenkörper 16 ist mit einer Mehrzahl von Stapeln 35 aus Faserlagen 1 und Folien 14 gebildet, die miteinander gewunden sind. Die abwechselnd gestapelten Faserlagen 1 und strukturierten Folien 14 bilden Kanäle 15, die für ein Abgas durchströmbar sind. Im Inneren der Kanäle sind (nicht dargestellte) Mikrostrukturen 17 vorgesehen, die die Gasströme 22 dazu bewirken, durch die Faserlage 1 hindurch zu strömen.

Die hier beschriebene Erfindung ermöglicht eine besonders effektive Reinigung von Partikeln aus Abgasen mobiler Verbrennungskraftmaschinen.

### Bezugszeichenliste

- 1: Faserlage
- 2: Abgasanlage
- 3: Verbrennungskraftmaschine
- 4: Faser
- 5: Lagendicke
- 6: Fläche
- 7: Porosität
- 8: Faserdurchmesser
- 9: Extremum
- 10: Teilbereich
- 11: Faserlänge
- 12: Abschnitt
- 13: Partikelfilter
- 14: Folie
- 15: Kanal
- 16: Wabenkörper
- 17: Mikrostruktur
- 18: Spalt
- 19: Spaltbreite
- 20: Fahrzeug
- 21: Partikel
- 22: Gasstrom
- 23: Filterlage
- 24: Teilgasstrom
- 25: Randschicht
- 26: Filterstrecke
- 27: Katalysator
- 28: Abgasleitung
- 29: Lagenlänge
- 30: Lagenbreite
- 31: Beschichtung
- 32: Öffnung
- 33: Strömungsrichtung
- 34: Gehäuse
- 35: Stapel

## Patentansprüche

1. Faserlage (1) geeignet für den Einsatz in einer Abgasanlage (2) einer mobilen Verbrennungskraftmaschine (3) umfassend einen Verbund aus Fasern (4) und mit einer Lagendicke (5), die sich von einer Fläche (6) der Faserlage (1) hin zu einer gegenüberliegenden Fläche (6) erstreckt, wobei die Faserlage (1) anhand wenigstens einer der folgenden Parameter charakterisierbar ist: Porosität (7), Faserdurchmesser (8), wobei zumindest einer der genannten Parameter in Richtung der Lagendicke (5) variierende Beträge aufweist, und ein Extremum (9) dieser Beträge von den Flächen (6) der Faserlage (1) entfernt vorliegt, wobei die Variation der Beträge im Wesentlichen symmetrisch zur Mitte der Lagendicke (5) ausgebildet ist und das Extremum (9) einen Minimalwert darstellt, **dadurch gekennzeichnet, dass** die Faserlage (1) mit einer variierenden Porosität (7) ausgestaltet ist und die Porosität (7) in einem innen liegenden zentralen Bereich der Faserlage (1) am geringsten ist.

2. Faserlage (1) nach Anspruch 1,**dadurch gekennzeichnet, dass** die Faserlage (1) metallische Fasern (4) umfasst.

3. Faserlage (1) nach Anspruch 1 oder 2,**dadurch gekennzeichnet, dass** die Faserlage (1) in Richtung der Lagendicke (5) mehrere Teilbereiche (10) aufweist, in denen jeweils wenigstens einer der Parameter konstant ist.

4. Faserlage (1) nach Anspruch 3, **dadurch gekennzeichnet, dass** eine ungerade Anzahl von Teilbereichen (10) vorliegt, wobei ein zentral angeordneter Teilbereich (10) den extremen Betrag des Parameters aufweist.

5. Faserlage (1) nach einem der vorhergehenden Ansprüche,**dadurch gekennzeichnet, dass** zumindest ein Teil der Fasern (4) über ihre Faserlänge (11) einen variierenden Faserdurchmesser (8) aufweisen.

6. Faserlage (1) nach Anspruch 5, **dadurch gekennzeichnet, dass** der Faserdurchmesser (8) über die Lagendicke (5) der Faserlage (1) variabel ausgestaltet ist und wobei in einem innen liegenden zentralen Bereich der Faserlage (1) Faser mit einem geringeren Faserdurchmesser vorliegen als in der Randbereichen.

7. Partikelfilter (13) geeignet für den Einsatz in einer Abgasanlage (2) einer mobilen Verbrennungskraftmaschine (3) umfassend mindestens eine Faserlage (1) gemäß einem der Ansprüche 1 bis 6, sowie mindestens eine zumindest teilweise strukturierte Folie (14), die zusammen Kanäle (15) eines Wabenkörpers (16) bilden, wobei wenigstens ein Teil der Kanäle (15) mindestens eine Mikrostruktur (17) aufweist.

8. Partikelfilter (13) nach Anspruch 7, **dadurch gekennzeichnet, dass** die mindestens eine Mikrostruktur (17) so in einem Kanal (15) angeordnet ist, dass ein hindurchströmender Gasstrom (22) hin zu der mindestens einen Faserlage (1) gelenkt wird.

9. Partikelfilter (13) nach Anspruch 7 oder 8, **dadurch gekennzeichnet, dass** die Mikrostruktur (17) und die Faserlage (1) einen Spalt (18) bilden, der eine Spaltbreite (19) kleiner 1,5 Millimeter hat.

10. Abgasanlage (2) einer Verbrennungskraftmaschine (3) umfassend einen Partikelfilter (13) nach einem der Ansprüche 7 bis 9.

11. Fahrzeug (20) umfassend einen Partikelfilter (13) nach einem der Ansprüche 7 bis 9.

12. Verfahren zum Entfernen von Partikeln (21) aus einem Gasstrom (22) mit einer gasdurchlässigen Filterlage (23), die eine Filterlage gemäß der Ansprüche 1 bis 6 ist, die in Richtung der Lagendicke (5) Teilbereiche (10) mit einem Parameter unterschiedlicher Beträge aufweist, wobei dieser Parameter wenigstens die Porosität (7) oder den Faserdurchmesser (8) von Fasern (4) der Filterlage (23) betrifft, bei dem der Gasstrom (22) in Teilgasströme (24) unterteilt wird, welche jeweils durch verschiedene Teilbereiche (10) der Filterlage (23) hindurchgeführt werden.

13. Verfahren nach Anspruch 12 bei dem ein Teilgasstrom (24) nur durch mindestens eine Randschicht (25) der Filterlage (23) hindurchgeführt wird, während ein weiterer Teilgasstrom (24) alle Teilbereiche (10) durchströmt.

14. Verfahren nach Anspruch 13, bei dem der Teilgasstrom (24), der nur die Randschicht (25) kontaktiert, eine Filterstrecke (26) durchströmt, die mindestens der Lagendicke (5) der Filterlage (23) entspricht.

15. Verfahren nach einem der Ansprüche 12 bis 13, bei dem die quantitative Bestimmung der jeweiligen Teilgasströme (24) durch die Filterlage (23) selbst bewirkt wird.

## Claims

1. Fibre layer (1) suitable for use in an exhaust system (2) of a mobile internal combustion engine (3), comprising an assembly of fibres (4) and having a layer thickness (5) which extends from one surface (6) of the fibre layer (1) toward an opposite surface (6), it being possible to characterize the fibre layer (1) on the basis of at least one of the following parameters: porosity (7), fibre diameter (8), wherein at least one of the parameters listed has magnitudes which vary in the direction of the layer thickness (5), and an extreme (9) of these magnitudes is at a distance from the surfaces (6) of the fibre layer (1), wherein the variation in the magnitudes is formed substantially symmetrically with respect to the centre of the layer thickness (5) and the extreme (9) constitutes a minimum value, **characterized in that** the fibre layer (1) is configured with a varying porosity (7) and the porosity (7) is lowest in an inwardly located central region of the fibre layer (1).

2. Fibre layer (1) according to Claim 1, **characterized in that** the fibre layer (1) comprises metallic fibres (4).

3. Fibre layer (1) according to Claim 1 or 2, **characterized in that** the fibre layer (1) has a plurality of subregions (10), in which in each case at least one of the parameters is constant, in the direction of the layer thickness (5).

4. Fibre layer (1) according to Claim 3, **characterized in that** there is an odd number of subregions (10), with a centrally arranged subregion (10) having the extreme magnitude of the parameter.

5. Fibre layer (1) according to one of the preceding claims, **characterized in that** at least some of the fibres (4) have a fibre diameter (8) which varies over their fibre length (11).

6. Fibre layer (1) according to Claim 5, **characterized in that** the fibre diameter (8) is configured to be variable across the layer thickness (5) of the fibre layer (1), and wherein in an inwardly located central region of the fibre layer (1) there are fibres having a smaller fibre diameter than in the peripheral regions.

7. Particulate filter (13) suitable for use in an exhaust system (2) of a mobile internal combustion engine (3), comprising at least one fibre layer (1) according to one of Claims 1 to 6, and at least one at least partially structured sheet (14), which together form passages (15) of a honeycomb body (16), at least some of the passages (15) having at least one microstructure (17).

8. Particulate filter (13) according to Claim 7, **characterized in that** the at least one microstructure (17) is arranged in such a way in a passage (15) that a gas stream (22) flowing through the passage is diverted toward the at least one fibre layer (1).

9. Particulate filter (13) according to Claim 7 or 8, **characterized in that** the microstructure (17) and the fibre layer (1) form a gap (18) which has a gap width (19) of less than 1.5 millimeters.

10. Exhaust system (2) of an internal combustion engine (3), comprising a particulate filter (13) according to one of Claims 7 to 9.

11. Vehicle (20) comprising a particulate filter (13) according to one of Claims 7 to 9.

12. Method for removing particulates (21) from a gas stream (22) using a gas-permeable filter layer (23) which is a filter layer according to Claims 1 to 6, which has subregions (10) with a parameter of differing magnitudes in the direction of the layer thickness (5), this parameter relating at least to the porosity (7) or the fibre diameter (8) of fibres (4) of the filter layer (23), in which method the gas stream (22) is divided into partial gas streams (24) which are each passed through different subregions (10) of the filter layer (23).

13. Method according to Claim 12, in which one partial gas stream (24) is passed only through at least one edge layer (25) of the filter layer (23), whereas a further partial gas stream (24) flows through all the subregions (10).

14. Method according to Claim 13, in which the partial gas stream (24) which comes into contact only with the edge layer (25) flows through a filter distance (26) which corresponds to at least the layer thickness (5) of the filter layer (23).

15. Method according to Claim 12 or 13, in which the quantitative determination of the respective partial gas streams (24) is effected by the filter layer (23) itself.

## Revendications

1. Couche (1) de fibres convenant pour être utilisée dans une installation (2) de gaz d'échappement du moteur (3) à combustion interne d'un véhicule, comprenant un composite de fibres (4) présentant une couche d'épaisseur (5) qui s'étend d'une surface (6) de la couche (1) de fibres à une surface opposée (6), la couche (1) de fibres pouvant être **caractérisée** à l'aide d'au moins l'un des paramètres suivants : porosité (7), diamètre (8) des fibres, au moins l'un desdits paramètres présentant des valeurs qui varient dans la direction de l'épaisseur (5) de la couche et un extrémum (9) de ces valeurs étant situé à distance des surfaces (6) de la couche (1) de fibres, la variation des valeurs étant essentiellement symétrique par rapport au centre de l'épaisseur (6) de la couche et l'extrémum (9) représentant une valeur minimale, **caractérisée en ce que** la couche (1) de fibres présente une porosité (7) variable et **en ce que** la porosité (7) est la plus basse dans une partie de la couche (1) de fibres située en position centrale.

2. Couche (1) de fibres selon la revendication 1, **caractérisée en ce que** la couche (1) de fibres comporte des fibres métalliques (4).

3. Couche (1) de fibres selon les revendications 1 ou 2, **caractérisée en ce que** dans le sens de l'épaisseur (5) de la couche, la couche (1) de fibres présente plusieurs parties (10) dans chacune desquelles au moins l'un des paramètres est constant.

4. Couche (1) de fibres selon la revendication 3, **caractérisée en ce qu'**elle présente un nombre impair de parties (10), une partie (10) disposée au centre présentant la valeur extrême du paramètre.

5. Couche (1) de fibres selon l'une des revendications précédentes, **caractérisée en ce que** le diamètre (8) d'au moins une partie des fibres (4) varie suivant la longueur (11) des fibres.

6. Couche (1) de fibres selon la revendication 5, **caractérisée en ce que** le diamètre (8) des fibres varie selon l'épaisseur (5) de la couche (1) de fibres et **en ce que** dans une partie de la couche (1) de fibres située au centre, les fibres présentent un diamètre plus petit que dans les parties de bord.

7. Filtre (13) à particules convenant pour être utilisé dans une installation (2) de gaz d'échappement du moteur (3) à combustion interne d'un véhicule, comprenant au moins une couche (1) de fibres selon l'une des revendications 1 à 6 et au moins une feuille (14) structurée au moins partiellement qui forment ensemble des canaux (15) d'un corps (16) en nid d'abeilles, au moins une partie des canaux (15) présentant au moins une microstructure (17).

8. Filtre (13) à particules selon la revendication 7, **caractérisé en ce que** la ou les microstructures (17) sont disposées dans un canal (15) de telle sorte qu'un écoulement (22) de gaz qui traverse est dévié en direction de la ou des couches (1) de fibres.

9. Filtre (13) à particules selon les revendications 7 ou 8, **caractérisé en ce que** la microstructure (17) et la couche (1) de fibres forment un interstice (18) dont la largeur (19) est inférieure à 1,5 millimètres.

10. Installation (2) de gaz d'échappement d'un moteur (3) à combustion interne, comprenant un filtre (13) à particules selon l'une des revendications 7 à 9.

11. Véhicule (20) comprenant un filtre (13) à particules selon l'une des revendications 7 à 9.

12. Procédé d'extraction de particules (21) hors d'un écoulement (22) de gaz à l'aide d'une couche (23) de filtre perméable aux gaz qui est une couche de filtre selon les revendications 1 à 6, qui présente dans la direction de l'épaisseur (5) de la couche des parties (10) dans lequel un paramètre présente des valeurs différentes, ces paramètres concernant au moins la porosité (7) ou le diamètre (8) des fibres (4) de la couche (23) de filtre, l'écoulement (22) de gaz étant divisé en écoulements partiels (24) de gaz qui traversent chacun différentes parties (10) de la couche (23) de filtre.

13. Procédé selon la revendication 12, dans lequel un écoulement partiel (24) de gaz ne traverse qu'au moins une couche (25) de bordure de la couche (23) de filtre tandis qu'un autre écoulement partiel (24) de gaz traverse toutes les parties (10).

14. Procédé selon la revendication 13, dans lequel l'écoulement partiel (24) de gaz qui n'est en contact qu'avec la couche (25) de bordure traverse un parcours de filtre (26) qui correspond à au moins l'épaisseur (5) de la couche (23) de filtre.

15. Procédé selon l'une des revendications 12 à 13, dans lequel la détermination quantitative de chacun des écoulements partiels (24) de gaz à travers la couche (23) de filtre s'effectue de manière autonome.
